# EUROPEAN PATENT APPLICATION

(11) **EP 1 494 375 A2**
(43) Date of publication of application: **05.01.2005**
(21) Application number: 04103007.3
(22) Date of filing: 28.06.2004
(51) Int. Cl.: H04H 1/00

(54) **Content Transfer**

(30) Priority: 30.06.2003 GB 0315286
(71) Applicant: Nokia Corporation, 02150 Espoo (FI)
(72) Inventor: Aaltonen, Janne, 20900, Turku (FI); Salo, Juha, 20660, Littoinen (FI); Ikonen, Ari, 21280, Raisio (FI)
(74) Representative: Piotrowicz, Pawel Jan Andrzej

(57) **Abstract**

A terrestrial digital video broadcasting (DVB-T) receiver in the form of a set-top box transmits an electronic service guide (ESG) to a mobile terminal in the form of a mobile telephone handset. A user can browse the ESG using the mobile telephone handset and select content to record. The mobile telephone handset transmits an instruction to the set-top box to record content. The set-top box records the content. The content is transferred to the mobile telephone handset when a personal area network connection between the set-top box and handset is established. Different content transfer modes may be specified. Content transfer or the timing of content transfer may be made conditional on the location of the mobile telephone handset, the type of connection available and the amount of content to be transferred. Content recovery may be used to help provide robust content transfer.

## Description

The present invention relates to apparatus for and a method of transferring content.

It is known to deliver content through digital broadcasting networks. An example of such a network is a terrestrial digital video broadcasting (DVB-T) network. A set-top box is typically used to receive a digital broadcast, to extract content and convert the content into a form for rendering by a television set.

Set-top boxes may additionally be provided with an integrated hard disk which can be used as a personal video recorder (PVR). However, this arrangement places limits on where a user can watch recorded content.

A solution is to transfer the recorded content to a mobile terminal thereby enabling the user to watch the recorded content "on the go". Content transfer is performed using a memory card. The memory card is inserted into the set-top box and content is copied to the card. The card is then inserted into the mobile terminal.

The present invention seeks to provide improved apparatus for and a method of transferring content.

According to the present invention there is provided a method of transferring content from a broadcast receiving terminal to a mobile terminal, the method comprising providing a request to the broadcast receiving terminal to record selected broadcast content and receiving the selected broadcast content from the broadcast receiving terminal.

Providing the request to record selected broadcast to the broadcast receiving terminal may comprise transmitting the request to record selected broadcast to the broadcast receiving terminal from the mobile terminal. Transmitting the request to record selected broadcast to the broadcast receiving terminal may comprise transmitting the request to record selected broadcast over a personal area network connection, for example via a public land mobile network (PLMN) or a personal area network.

The method may comprise determining whether a network connection can be established and if a network connection can be established, establishing said network connection. The method may further comprise transmitting said request to record selected broadcast in dependence upon establishing said network connection. Providing the request to record selected broadcast to the broadcast receiving terminal may comprise transmitting the request to record selected broadcast from a user interface coupled to the broadcast receiving terminal. The method may further comprise receiving instructions from a user via a television set and preparing said request in dependence upon said instructions. The method may comprise providing a request to the broadcast receiving terminal to transfer recorded selected broadcast content. The method may further comprise receiving a request for identification from said broadcast receiving terminal. The method may comprise providing identification to said broadcast receiving terminal. The method may comprise receiving the selected broadcast content from the broadcast receiving terminal via a public land mobile network and/or a personal area network connection.

The method may comprise receiving a broadcast schedule from the broadcast receiving terminal. Receiving the broadcast schedule from the broadcast receiving terminal may comprise receiving the broadcast schedule from the broadcast receiving terminal via a public land mobile network. Receiving the broadcast schedule from the broadcast receiving terminal may comprise receiving the broadcast schedule from the broadcast receiving terminal via a personal area network connection. The method may comprise presenting said broadcast schedule to said user. The method may further comprise receiving a selection of broadcast content from said broadcast schedule, said selection being made by a user. The method may comprise determining an amount of the selected broadcast content and determining connectivity for receiving said selected broadcast content. The method may comprise selecting a time for receiving said selected broadcast content in dependence upon said amount and said connectivity. The method may comprise providing a preference table for selecting the time. The method may comprise receiving notification from the broadcast receiving terminal that said selected content has been recorded. The method may comprise receiving from said broadcast receiving terminal a download descriptor. The method may further comprise storing said download descriptor. The method may comprise receiving data packets comprising at part of said selected content. The method may further comprise determining whether content transfer has been interrupted. The method may further comprise determining at least part of said selected content still to be transferred. The method may further comprise transmitting a request to continue downloading, said request including identity of said at least part of said selected content still to be transferred. The method may further comprise determining whether said selected broadcast content has been successfully transferred and if said selected broadcast content has been successfully transferred, transmitting a notification to said broadcast receiving terminal that the selected broadcast content has been successfully transferred.

According to present invention there is also provided a method of transferring content from a broadcast receiving terminal to a mobile terminal, the method comprising receiving a request to record selected broadcast content and transmitting the selected broadcast content to a mobile terminal.

According to the present invention there is further provided a system for transferring content from a broadcast receiving terminal to a mobile terminal, the method comprising providing a request to the broadcast receiving terminal to record selected broadcast content and receiving the selected broadcast content from the broadcast receiving terminal.

According to the present invention there is still further provided a system for transferring content from a broadcast receiving terminal to a mobile terminal, the method comprising receiving a request to record selected broadcast content; and transmitting the selected broadcast content to a mobile terminal.

According to the present invention there is also provided apparatus comprising a digital broadcast receiving terminal and a mobile terminal, each terminal including a respective personal area network interfacing means, the mobile terminal being configured to transmit a request to the digital broadcast receiving device to record data relating to selected broadcast content, the digital broadcast receiving terminal being configured to extract said selected broadcast content data from a digital broadcast, to store the selected broadcast content data in memory and to transmit the selected broadcast content data to the mobile terminal triggered by establishment of a personal area network connection between the terminals.

According to the present invention there is also provided a digital broadcast receiving terminal including a personal area network interfacing means and configured to receive a request from a mobile terminal to record selected broadcast content, to extract data relating to the selected broadcast content from a digital broadcast, to store the selected broadcast content data in memory and to transmit the selected broadcast content data to the mobile terminal triggered by establishment of a personal area network connection between the terminals.

The digital broadcast receiving terminal may be configured to extract data relating to a broadcast schedule from the digital broadcast. The digital broadcast receiving terminal may be configured to transmit at least part of the broadcast schedule data to the mobile terminal. The digital broadcast receiving terminal may be configured to select at least part of the broadcast schedule data and to transmit said at least part of the broadcast schedule data to the mobile terminal. The digital broadcast receiving terminal may be configured to filter the broadcast schedule data using a user profile and to transmit said filtered broadcast schedule data to the mobile terminal. The digital broadcast receiving terminal may be configured to transmit at least part of the broadcast schedule data or filtered broadcast schedule data to the mobile terminal in response to establishment of a personal area network between the terminals. The digital broadcast receiving terminal may be configured to transmit at least part of the broadcast schedule data or filtered broadcast schedule data to the mobile terminal via another network. The digital broadcast receiving terminal may be configured to transmit an identification request to the mobile terminal via the personal area network. The digital broadcast receiving terminal may be configured to receive identification from the mobile terminal via the personal area network and to authenticate the mobile terminal using said identification. The digital broadcast receiving terminal may be configured to receive a request to download the selected broadcast content data. The digital broadcast receiving terminal may be configured to transmit the selected broadcast content data to the mobile terminal in response to receiving said request to download the selected broadcast content.

According to the present invention there is also provided a mobile terminal having a personal area network interfacing means and configured to transmit a request to a digital broadcast receiving terminal to record selected broadcast content and to receive data relating to the selected broadcast content from the digital broadcast receiving terminal triggered by establishment of a personal area network between the terminals.

The mobile terminal may be configured to receive data relating to a broadcast schedule from the digital broadcast receiving terminal. The mobile terminal may be configured to allow a user to select the broadcast content for recording using the broadcast schedule. The mobile terminal may be configured to transmit the request to the digital broadcast receiving terminal to record selected broadcast content in response to establishment of a personal area network between the terminals. The mobile terminal may be configured to transmit an identification request to the digital broadcast receiving terminal via the personal area network. The mobile terminal may be configured to receive identification from the digital broadcast receiving terminal via the personal area network.

According to the present invention there is also provided apparatus comprising a digital broadcast receiving terminal and a mobile terminal, the terminals including respective personal area network interfacing means, the mobile terminal being configured to transmit a request to the digital broadcast receiving device to record selected broadcast content, the digital broadcast receiving terminal being configured to extract data relating to the selected broadcast content from a digital broadcast, to store the selected broadcast content data in memory and to transmit the selected broadcast content data to the mobile terminal at a predetermined time.

Embodiments of the present invention will now be described by way of example with reference to the accompanying drawings in which:
Figure 1 is a schematic diagram of an embodiment of a system for broadcasting content from a digital broadcaster to a digital broadcast receiving terminal and transferring content from the digital broadcast receiving terminal to a mobile terminal according to the present invention;
Figure 2 is a more detailed schematic diagram of the digital broadcaster shown in Figure 1;
Figure 3 is a more detailed schematic diagram of the digital broadcast receiving terminal shown in Figure 1;
Figure 4 is a more detailed schematic diagram of the mobile terminal shown in Figure 1;
Figure 5 illustrates networks for connecting a digital broadcast receiving terminal and a mobile terminal;
Figure 6 is a process flow diagram of a method of transferring an electronic service guide from a digital broadcast receiving terminal to a mobile terminal in accordance with the present invention;
Figure 7 is a process flow diagram of a method of recording in a digital broadcast receiving terminal;
Figure 8 is a flow diagram of a method of selecting content to record;
Figure 9 illustrates a display of a mobile terminal showing a representation of an electronic service guide;
Figure 10 illustrates a display of a mobile terminal showing a representation of an a list of recorded item;
Figure 11 is a flow diagram of a method of selecting a transferring mode;
Figure 12 is a flow diagram of a method of transferring content according to whether a digital broadcast receiving terminal and a mobile terminal are connected by a personal area network;
Figure 13 is a flow diagram of a method of transferring content according to a schedule;
Figure 14 is a flow diagram of a method of transferring content using a preference table;
Figure 15 is a flow diagram of a method of setting up a preference table;
Figure 16 is a flow diagram of a method of processing content data;
Figure 17 is a flow diagram of a first method of authentication;
Figure 18 is a flow diagram of a second method of authentication;
Figure 19 is a flow diagram of a third method of authentication;
Figure 20 is a diagram of functional elements of the digital broadcast receiving terminal to mobile terminal shown in Figure 1;
Figure 21 is a flow diagram of a method of transferring content from digital broadcast receiving terminal to mobile terminal shown in Figure 19; and
Figure 22 illustrates an on-screen display of a television set.

### Digital broadcasting and content transferring system 1

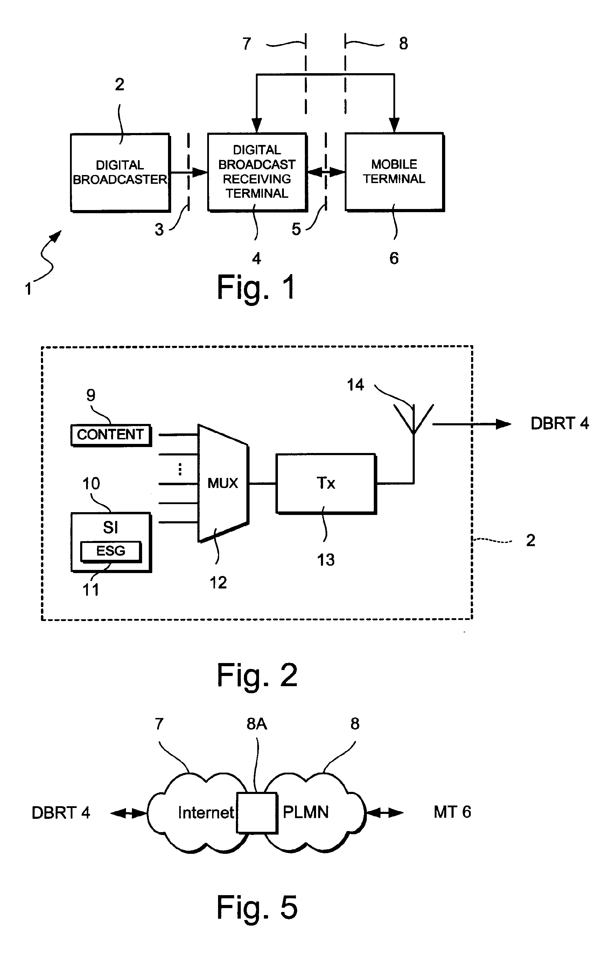

Referring to Figure 1, an embodiment of a digital broadcasting and content transferring system 1 according to the present invention is shown.

A digital broadcaster 2 transmits via a digital broadcast network connection 3 to a digital broadcast receiving terminal 4. The digital broadcast network is a terrestrial digital video broadcasting (DVB-T) network, the digital broadcaster 2 is a DVB-T transmitter and the digital broadcast receiving terminal 4 is a DVB-T receiver in the form of a set-top box.

The digital broadcast receiving terminal 4 is connectable via a personal area network connection 5 to a mobile terminal 6 in the form of mobile telephone handset. The digital broadcast receiving terminal 4 is also connectable to the mobile terminal 6 via other networks 7, 8, preferably the Internet and a public land mobile network (PLMN).

### Digital broadcaster 2

Referring to Figure 2, the digital broadcaster 2 receives content data 9, in the form of MPEG-2 encapsulated data packets, for a television channel and other content data (not shown) for a number of other television, radio and data channels. The digital broadcaster 2 generates service information 10 which includes an electronic service guide (ESG) 11 or electronic program guide (EPG) which provides a database for digital broadcast receiving terminals 4 (Figure 1). A multiplexer 12 is used to multiplex the channels and service information 10 and the resulting signal is fed into a transmission circuit 13 for encryption, modulation, amplification and transmission via antenna 14.

Digital broadcasting is preferably performed in accordance with ETSI Standard EN 300 744 "Digital Video Broadcasting (DVB): Framing structure, channel coding and modulation for digital terrestrial television" V.1.1.2 (1997) and related specifications. MPEG-2 encapsulation is described in more detail in MPEG-2 Systems ISO/IEC 13818-1.

### Digital broadcast receiving terminal 4

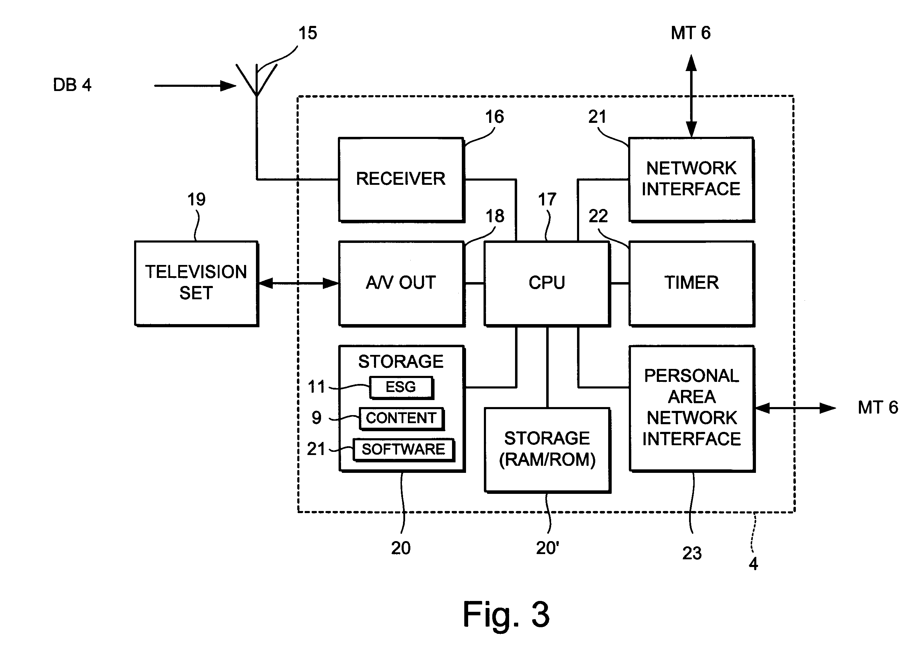

Referring to Figure 3, the digital broadcast receiving terminal 4 receives signals from the digital broadcaster 2 via an antenna 15 and feeds the signals into a receiver circuit 16 for decrypting, demodulating and demultiplexing so as to extract content data 9 (Figure 2) and the ESG 11 or EPG. The receiver circuit 16 feeds the content data 9 to a processor 17 for decoding. The decoded signal is fed into an audio-visual output circuit 18 to convert signals to a form suitable for a television set 19.

The MPEG-2 enscapsulated content data 9 and ESG 11 can be recorded in storage 20 which in the form of a hard disk. The capacity of the hard disk is preferably greater than 10GB. Other forms of storage, such as read only memory and random access memory 20', are also provided. The hard disk 20 also stores software 21, such as operating system software and application software.

The digital broadcast receiving terminal 4 provided with a timer 22. The digital broadcast receiving terminal 4 includes a personal area network interface 23. The personal area network interface 23 may be in the form of a wired personal area network interface, such as wire local area network (LAN) card, or a wireless personal area network interface, such as an infrared (IR) interface or a low power radio frequency (LPRF) interface, such as Bluetooth™ transceiver or wireless (LAN) card.

An IrDA Data specification and system overview may be found at www.irda.org or obtained from the Infrared Data Association (IrDA), Walnut Creek, California, USA. A Bluetooth™ specification (v1.0B) and system overview may be found at www.bluetooth.com or obtained from Bluetooth SIG, c/o Daniel Edlund, Facsimile number +46 70 615 9049. For details relating to WLAN, reference is made to IEEE802.11 specification, a copy of which may be obtained from IEEE web-site at http://standards.ieee.org.

The digital broadcast receiving terminal 4 also includes a network interface 21 for exchanging signals over non personal area networks. For example, the network interface 21 is in the form of a cable modem for connection to the Internet 7. Alternatively, the network interface 21 can be modem connection. The network interface can be also implemented logically using personal area network interface 23 to form modem connection via mobile terminal 6 if in proximity.

### Mobile terminal 6

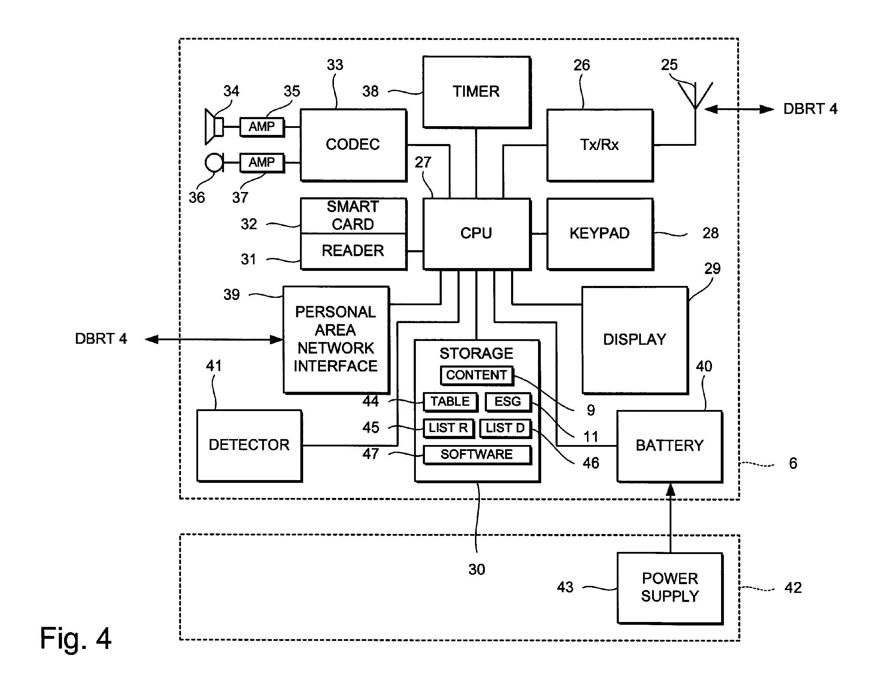

Referring to Figure 4, the mobile terminal 6 in the form of a mobile telephone handset comprises an antenna 25, transceiver circuit 26 for, *inter alia*, modulating/de-modulating and amplifying signals, processor 27 for, *inter alia*, coding/decoding signals, keypad 28 for providing user input, display 29 for providing output, storage 30, a smart card reader 31, smart card 32 received in the smart card reader 31, a coder/decoder (codec) 33, a speaker 34 with corresponding amplifier 35 and a microphone 36 with a corresponding pre-amplifier 37, clock 38, personal area network interface 39 and battery 40. The mobile terminal 4 may also include a detector 41 for detecting whether the mobile terminal 4 is installed in a cradle 42. The cradle 42 includes a power supply 43 for recharging battery 41.

Storage 30 is in the form of solid-state memory and comprises volatile and non-volatile component parts (not shown). Memory 30 stores content data 9, ESG 11, table of preferences 44, a list of items to record 45, a list of items to download 46 and software 47. Preferably, storage 30 has a capacity of at least 1GB. The storage 30 can be changeable storage like Flash Multimedia Card (MMC), MemoryStick™ or compact flash card.

The processor 27 manages operation of a mobile terminal 6 under the direction of computer software 47. For example, the processor 27 provides an output to the display 29 and receives inputs from the keypad 28.

### Networks 7, 8

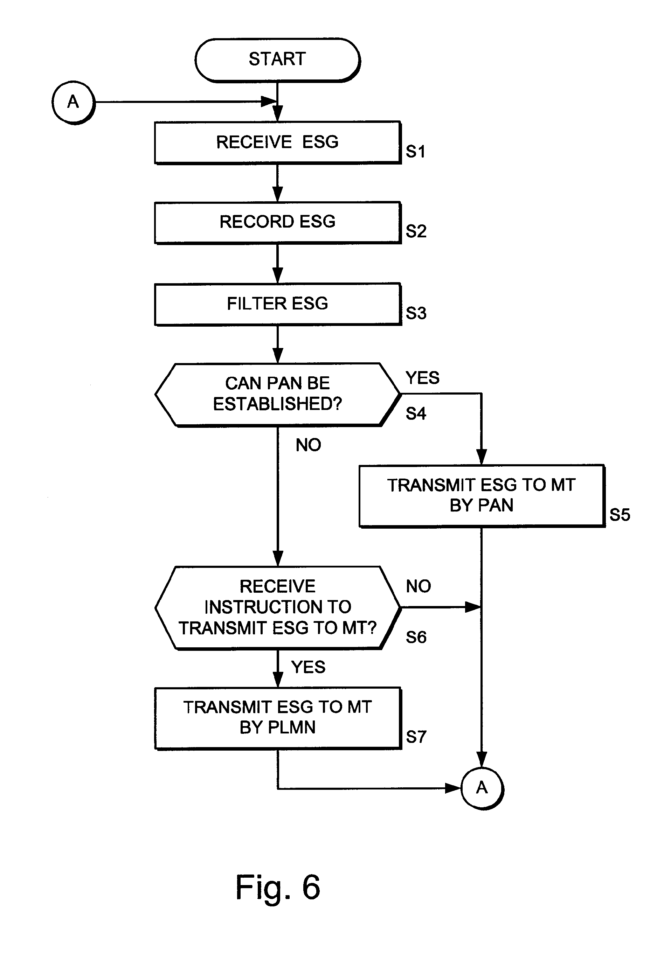

Referring to Figure 5, the digital broadcast receiving terminal 4 can access a PLMN 8 via the Internet 7 and a PLMN operator 8A. In this way, the digital broadcast receiving terminal 4 can access the mobile terminal 6 without needing to use a personal area network connection 5 (Figure 1). However, a premium may be paid for using PLMN 8 and may not provide data transfer rates as high as those provided by personal area network connection 5 (Figure 1).

### Operation of digital broadcast receiving terminal 4 and mobile terminal 6

In an embodiment of the present invention, the digital broadcast receiving terminal 4 transmits the ESG 11 to the mobile terminal 6. A user can browse the ESG 11 and select content to record. The mobile terminal 6 transmits an instruction to the digital broadcast receiving terminal 4 to record content data 9. Connection between mobile terminal 6 and digital broadcast receiving terminal 4 can be via personal area network or via PLMN. The digital broadcast receiving terminal 4 records the content data 9. The content data 9 can be transferred to the mobile terminal 6 when a personal area network connection between the terminals 4, 6 is established, usually if the terminals 4, 6 are close enough to one another. Different content transfer modes may be specified. Content transfer or the timing of content transfer may be made conditional on the location of the mobile terminal, the type of connection available and the amount of content to be transferred. Content recovery may be used to help provide robust content transfer.

Content data 6 can be also transferred to mobile terminal via PLMN and Internet if mobile terminal and digital broadcast receiving terminal are not in proximity.

It is noted that in the following description, the transmitting of an ESG to the mobile terminal 6, transmitting of a request to record content to the digital broadcast receiving terminal 4 and downloading content to the mobile terminal 6 may be performed independently of one another.

### An embodiment of the present invention will now be described in more detail:

### Transmitting ESG 11 to mobile terminal 6

Referring to Figure 6, a flow diagram of a method of transmitting the ESG 11 from digital broadcast receiving terminal 4 to the mobile terminal 6 is shown.

Referring also to Figures 1, 2, 3 and 4, when the digital broadcast receiving terminal 4 is switched, it begins to receive digital broadcast over the digital broadcast network 3 and extracts the ESG 11 from service information 10 (step S1). The digital broadcast receiving terminal 4 records the ESG 11 in storage 20 (step S2). The ESG 11 provides a database of channels and channel content provided by the digital broadcaster 2 and, optionally, other digital broadcasters (not shown). The ESG 11 may be provided using a carousel (not shown) and may be periodically updated.

Optionally, the ESG 11 is filtered based on user preferences (step S3). For example, the user may be interested in comedy and sport. Therefore, items not relating to comedy and sport are filtered out from the ESG 11. This can have the advantage of reducing the size of the ESG 11.

The digital broadcast receiving terminal 4 or the mobile terminal 6 determines whether conditions are such that a personal area network connection 5 can be established (step S4). Usually, this involves determining whether the terminals 4, 6 are proximate. Determining whether the conditions are met may include exchanging signals to determine whether the personal area network can be established or establishing the personal area network. Determining whether the conditions are met may also be conditional on authentication. In the case where a wired personal area network is used, determining whether the conditions are met depends on whether a wireline connection has been established.

If the conditions are met, then the ESG 11 is transmitted to the mobile terminal 6 via the personal area network connection 5 (step S5). This may performed automatically, in the sense that the digital broadcast receiving terminal 4 transmits the ESG 11 without prompting from the user and/or substantially immediately once the personal area network connection 5 is established.

Otherwise, the digital broadcast receiving terminal 4 checks whether it has received an instruction from the user to transmit the ESG 11 to the mobile terminal 6, for example via networks 7, 8 (step S6). The instruction may be transmitted by the user of the mobile terminal via networks 7, 8. If an instruction is received, the digital broadcast receiving terminal 4 transmits the ESG 11 via networks 7, 8 (step S7).

Conditions may be set for using the networks 7, 8 to transmit ESG 11 or parts of ESG 11 to the mobile terminal 6. For example, a condition may be imposed that the PLMN 8 can only be used if the cost of transmitting data, such as ESG 11 or parts thereof, falls under a certain price level.

The networks 7, 8 can be used to transmit instructions for controlling digital broadcast receiver 4.

### Recording

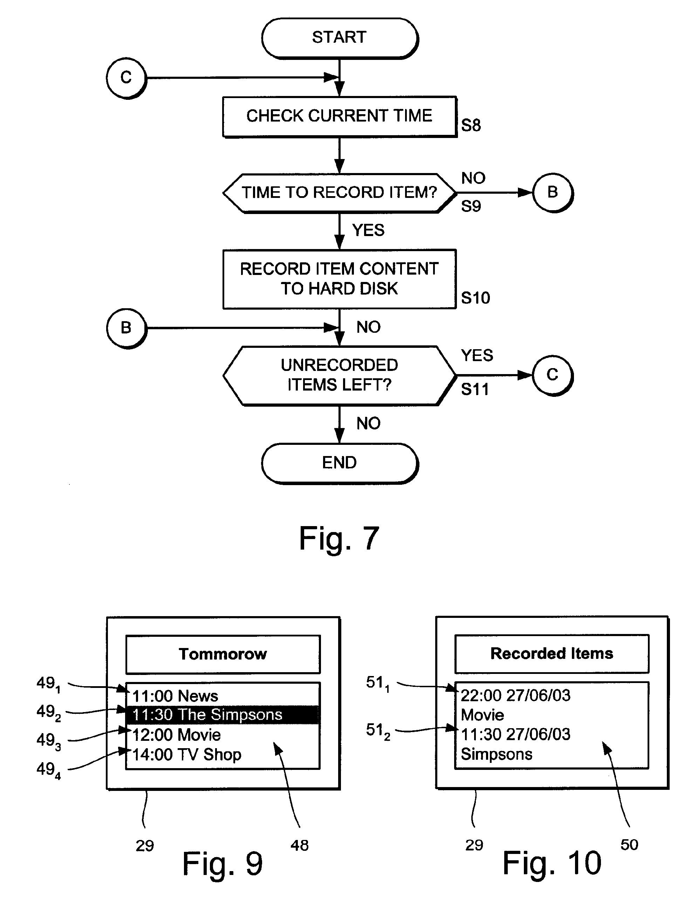

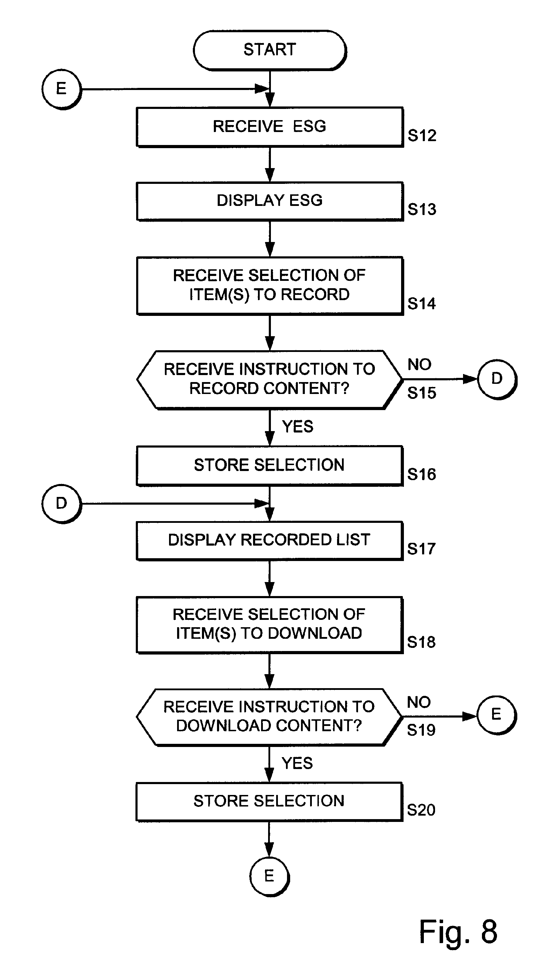

Referring to Figure 7, a flow diagram of a method of recording content data 8 at the digital broadcast receiving terminal 4 is shown.

Referring also to Figures 1, 2, 3 and 4, the digital broadcast receiving terminal 4 checks the current time (step S8) and determines whether it is time to record an item (step S9). This may involve examining a list of items to record, each item having a record start time, and checking the current time against the record start time.

If it is time to record an item, then the digital broadcast receiving terminal 4 records the item in storage 30 (step S10). Once done, the digital broadcast receiving terminal 4 checks whether there are further items to record (step S11). If so, it continues to check the current time (step S8).

The digital broadcast receiving terminal 4 may optionally transmit a notification (not shown) to the mobile terminal 4 that a content item which it has requested to be recorded has in fact been so recorded. If more than one content item has been recorded, then the notification may include a list of items. Preferably, the notification is transmitted through network 7, 8 so as to ensure that the mobile terminal 6 receives the notification.

### Selecting items to record and items to download at the mobile terminal 6

Referring to Figure 8, a flow diagram of a method of selecting items to record is shown.

Referring also to Figures 1, 2, 3, 4 and 9, the mobile terminal 6 receives the ESG 11 transmitted by the digital broadcast receiving terminal 4 and stores it in memory 30 (step S12). On request, the ESG 11 is retrieved and a representation 48 of the ESG 11 is presented to the user on display 29 (step S13). An example of a representation 48 of the ESG 11 is shown in Figure 9. The ESG 11 includes a number of content items 49₁, 49₂, 49₃, 49₄.

The user can highlight a content item 49₂ using keypad 28 and select it to be recorded (step S14). For example, the content item 49₂ may be an episode of television series, a film, a documentary, a sports match, news bulletin or the like. However, the content item 49₂ may be a portion of any of these items. The mobile terminal 6 checks whether it has received an instruction to record selected content items (step S15). If so, the identity of the content items, together with associated data for helping to extract the content data relating to the content item, is stored in list 45 held in memory 30 (step S16). The user may subsequently add items to, remove items from or edit items in the list 45.

Because the user can select items to record from the ESG, the possibility of error can be reduced.

Referring also to Figure 10, the user can also select items to download.

On request, a list 46 of content items for which requests to record have been previously transmitted to the digital broadcast receiving terminal 4 -but not yet downloaded to the mobile terminal 6- is retrieved and a representation 50 is presented to the user on display 29 (step S17). An example of a representation 50 of the list is shown in Figure 10. The list 46 includes a number of items 51₁, 51₂. The representation 50 may include an icon (not shown), such as a tick, to indicate that a notification (not shown) has been received from the digital broadcast receiving terminal 4 that an item has been recorded. Alternatively, only items for which a notification (not shown) has been received from the digital broadcast receiving terminal 4 may be displayed.

In a similar fashion to selecting items to record, the user can highlight an item 51₂ and select the content item to which it refers to be transferred (step S18). The mobile terminal 6 checks whether it has received an instruction to transfer a selected content items (step S19). If so, the identity of the content items, together with associated data for helping to download the content data, is stored in list 46 (step S20). The user may subsequently add items to, remove items from or edit items in the list 46.

In this way, the user can select items to download when he or she is ready to do so.

The user can also select items to record and/or download to the mobile terminal 6 using a user interface of the television set 19 or digital broadcast receiving terminal 4. In particular, an on screen display may display not only options for recording content, but also further options for selecting the content for transferring to the mobile terminal 6. The further options may include options for identifying the mobile terminal 6.

### Selecting transfer mode

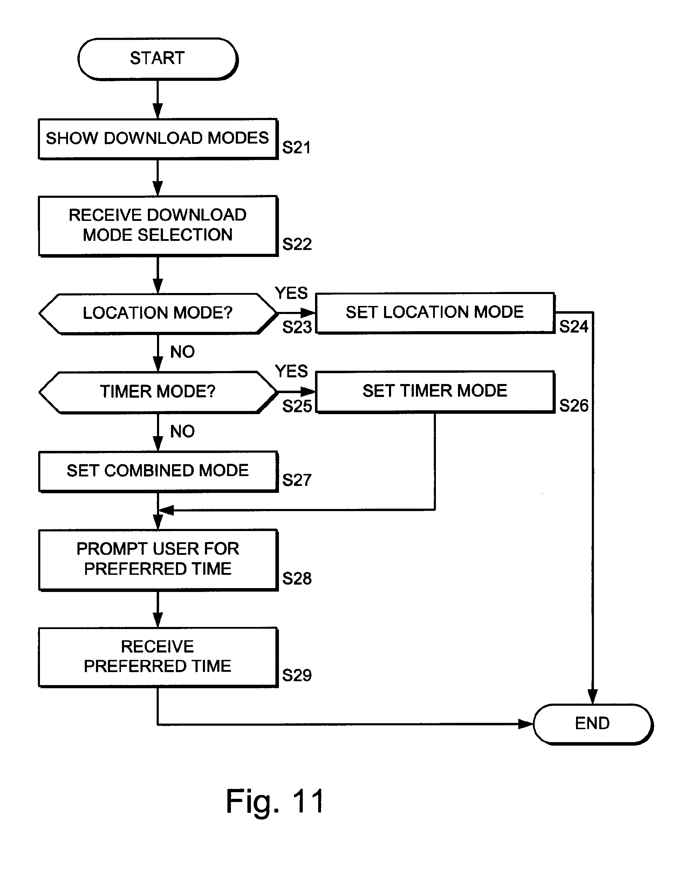

Referring to Figure 11, a flow diagram of a method of selecting a transfer mode is shown.

On demand, a list of transfer modes is presented to the user (step S21). Three transfer modes are available: location mode, timer mode and combined location/timer mode. The mobile terminal 6 receives a selection from the user (step S22).

The mobile terminal 6 determines whether the selection is the location mode (step S23). If so, it configures the mobile terminal 6 to transfer recorded content data when a personal area network is established (step S24).

If not, the mobile terminal 6 determines whether the selection is the timer mode (step S25). If so, it configures the mobile terminal 6, to receive recorded content data 8 at a specified time, for example overnight (step S26). The content data 8 will usually be transferred via a personal area network connection 5. However, establishment of the personal area network connection 5 does not, *per se*, trigger content transfer. Thus, it is assumed that personal area network connection has or shall be established in time for content transfer.

If neither location mode, nor timer mode is selected then combined location/timer mode is selected (step S27). In combined location/timer mode, the time at which content data transferred depends on the type of network available, in other words the available connectivity, and the size of content data file. A preference table is defined and will be described in more detail later.

If either timer mode or combined location/timer mode is chosen, then the user is prompted to specify a preferred time to transfer content (step S28). For example, the user may specify a time during the night, such as 1 am. The specified time is stored in memory (step S29).

### Setting a preference table for combined location/timer mode transfer

As explained earlier, in combined location/timer mode, the time at which content data transferred depends on the type of network available and the amount of content data. Dependency is defined using one or more preference tables.

An example of a preference table is shown in Table 1 below:

**Table 1**

| **Connectivity** | **File Size** | | |
|---|---|---|---|
| | **x ≤ x**_{**1**} | **x**_{**1**} **< x < x**_{**2**} | **x**_{**2**} **≤ x** |
| Wireline | Immediately | Immediately | Immediately |
| IRDA | Immediately | Night | Night |
| Bluetooth | Immediately | Night | Night |
| Wi-Fi | Immediately | Night | Night |
| WLAN | Immediately | Immediately | Night |
| GPRS | Immediately | Immediately | Night |
| WCDMA | Immediately | Immediately | Night |
| | | | |

Thus, if a personal area network connection 5 is available and if the size, x, of the content data file is less than a given size x₁, then the file will be transferred immediately. If the size of the file falls within a range of x₁ to x₂ then depending on whether a wireline connection or a high speed network such as WLAN, GPRS or WCDMA network is available, then the file will be transferred immediately. Otherwise, it will be transferred overnight. If the size of the file is greater than x₂, then content transfer is delayed and performed overnight, unless a wireline connection is available.

Typical values of x₁ and x₂ are 10MB and 200MB respectively.

A number of tables may be specified.

A first table may be set when then user expects to pass the digital broadcast receiving terminal 4 at some point during the day. This may correspond to a normal, working day or weekend at home. Table 1 above is an example of a preference table for such a day.

A second table may be set when the user does not expect to pass the digital broadcast receiving terminal 4 at any point during the day. This may happen when the user is away from home, for example when they are on holiday or on a business trip. Table 2 below is an example of a preference table which reflects such an occasion:

**Table 2**

| **Connection** | **File Size** | | |
|---|---|---|---|
| | **x ≤ x**_{**1**} | **x**_{**1**} **< x < x**_{**2**} | **x**_{**2**} **≤ x** |
| Wireline | - | - | - |
| I RDA | - | - | - |
| Bluetooth | - | - | - |
| Wi-Fi | - | - | - |
| WLAN | - | - | - |
| GPRS | Immediately | Night | Night |
| WCDMA | Immediately | Night | Night |

In Table 2, scope for immediate downloading content data is limited unless the content data files are small. However, larger files may be downloaded overnight. Also, content transfer is performed over a PLMN, such a network supporting GPRS or WCDMA network.

Even when the user is travelling and does not have access to their usual television listings and television programmes, they can still select items for recording and download recorded items to their mobile terminal 4. The digital broadcast receiving terminal 4 is arranged as a server to enable downloading of recorded items over one or more network, which preferably include a PLMN.

Thus, the mobile terminal 6 can locally or remotely control the digital broadcast receiving terminal 4, receiving an ESG, sending requests to record programs and downloading programs.

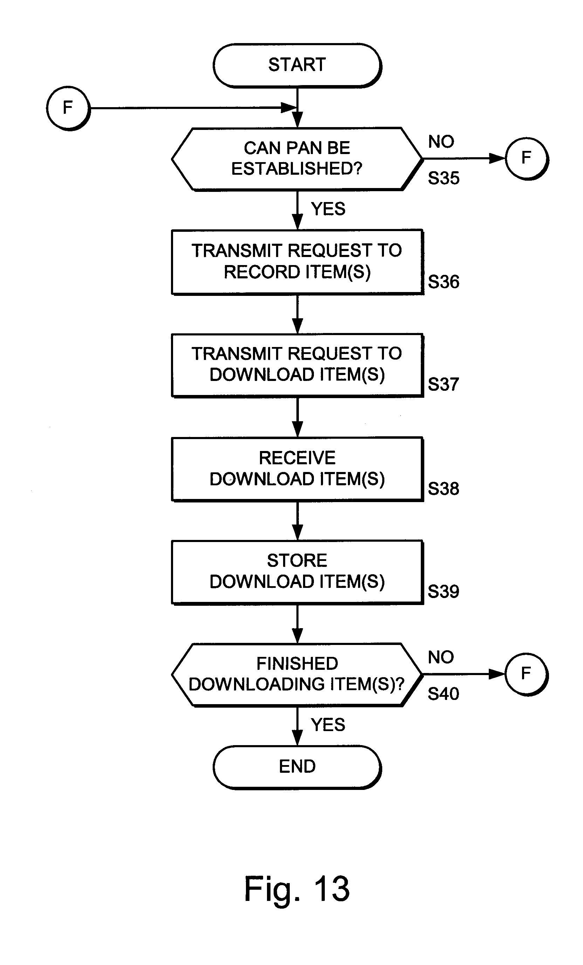

Referring to Figure 12, a flow diagram of a method of configuring a preference table 44 for combined location/timer mode transfer is shown.

On demand, the preference table 44 is retrieved from memory and displayed (step S30 & S31). The user can change entries in the table, for example selecting no transfer under any circumstances ("-"), immediately ("immediately") or a preferred time, such as overnight ("night"). The preferences are received (step S32) and if an instruction to store the preference table is received, then the preference table is stored in memory (steps S33 & S34).

### Transmitting instructions and transferring content

### - First example-

Referring to Figure 13, a flow diagram of a first example of a method of transmitting instructions and transferring content according to the present invention is shown. In this example, a user has specified that transmission of instructions and transfer (downloading) of content be carried out in so-called "location mode".

The digital broadcast receiving terminal 4 and/or the mobile terminal 6 determine whether a personal area network connection 5 can be established between the terminals 4, 6 (step S35). Preferably, the mobile terminal 6 determines this condition.

In the case of a wireless personal area network, particularly a radio-based network, the determination of whether personal area network connection 5 can be established may include exchanging signals prior to establishing personal area network connection 5, for example to measure and report signal strength. However, the step may include establishing the personal area network connection and, optionally, performing authentication.

If a personal area network connection 5 can be established but has not been so established, then the personal area network connection 5 is established.

Automatic transmission of requests and/or transfer of content data takes place. By automatic, we mean that these actions are triggered as a result of determining whether the personal area network connection can be or is established and/or takes place without user instruction.

A request to record content items included in list 45 (Figure 4) and/or a request to transfer (download) content items included in list 46 (Figure 4) is/are transmitted from the mobile terminal 6 to the digital broadcast receiving terminal 4 (steps S36 & S37).

If a request to transfer a content item has been sent, then content data 9 relating to the content item is transmitted from the digital broadcast receiving terminal 4 to the mobile terminal 6 (step S38) and stored in memory 30 (step S39).

The process of receiving content data is repeated for each content item (step S40).

Thus, when the mobile terminal 6 is brought into a "hot spot" where it can establish a personal area network connection 5 with the digital broadcast receiving terminal 4 requests can be transmitted and content data can be downloaded.

The exchange of instructions and/or content may be triggered by placing the mobile terminal 6 in its cradle 42 (Figure 4) which is sensed by detector 41 (Figure 4). This may simply involve completing a circuit and detecting current flow.

### - Second example-

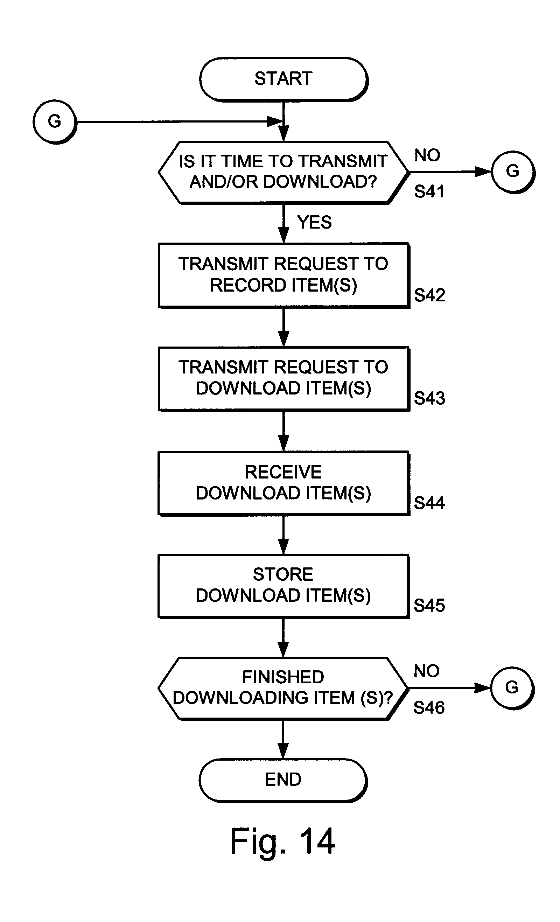

Referring to Figure 14, a flow diagram of a second example of a method of transmitting instructions and transferring content according to the present invention is shown. In this example, a user has specified that the transmission of instructions and transfer of content be carried out in so-called "timer mode".

The mobile terminal 6 is arranged so that a personal area network connection 5 is established or can be established between the digital broadcast receiving terminal 4 and the mobile terminal 6. For example, this may involve placing the mobile terminal 6 in a cradle 42 (Figure 4), close to the digital broadcast receiving terminal 4 or, if a wireline connection is used, connecting the wireline.

The digital broadcast receiving terminal 4 and/or the mobile terminal 6 determine whether it is time to transmit instructions and/or transfer content (step S41). Preferably, the mobile terminal 6 determines this condition.

If a personal area network connection 5 has not been established, then one is established between the terminals 4, 6.

A request to record content items included in list 45 (Figure 4) and/or a request to transfer (download) content items included in list 46 (Figure 4) is transmitted from the mobile terminal 6 to the digital broadcast receiving terminal 4 (steps S42 & S43).

If a request to transfer a content item has been sent, then content data 9 relating to the content item is transmitted from the digital broadcast receiving terminal 4 to the mobile terminal 6 (step S44) and stored in memory 30 (step S45).

The process of receiving content data is repeated for each content item (step S46).

In this way, the digital broadcast receiving terminal 4 and the mobile terminal 6 wait until a convenient time before transmitting requests and transferring content data.

### - Third example-

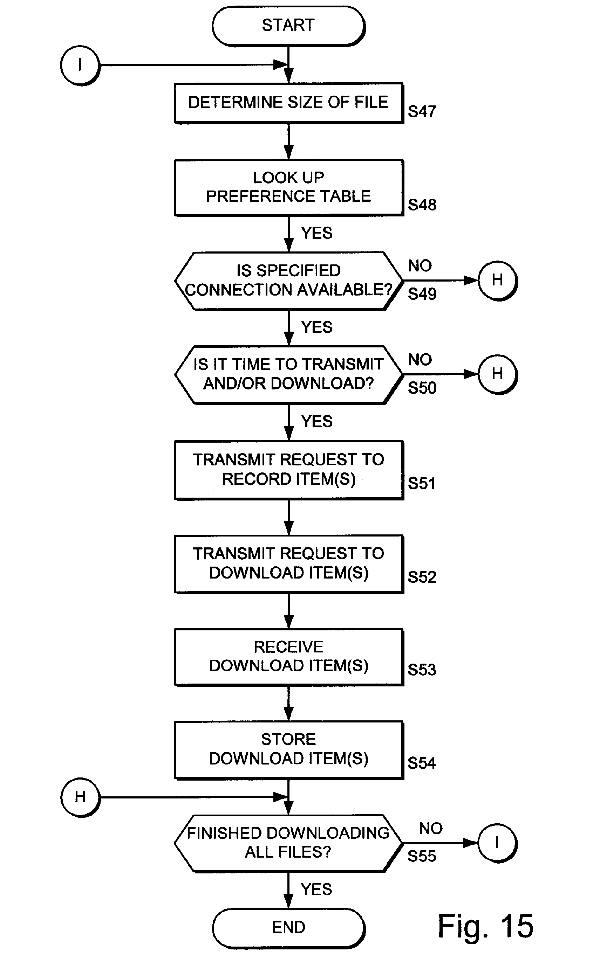

Referring to Figure 15, a flow diagram of a third example of a method of transferring content according to the present invention is shown. In this example, a user has specified that be carried out in so-called "combined location/timer mode".

This method is preferably used when a request to record content has already been transmitted from the mobile terminal 6 to the digital broadcast receiving terminal 4 and content is ready to be downloaded. However, it may also be used to transmit instructions from the digital broadcast receiving terminal 4 to the mobile terminal 6.

The mobile terminal 6 determines the size of file to be transferred (step S47). In this case, the file comprises content data 9.

The mobile terminal 6 looks up the preference table 44 (step S48), determines whether connectivity is available (steps S49) and based on connectivity and file size determines whether it is time to transfer content (step S50).

If a personal area network connection 5 has not been established, then one is established between the terminals 4, 6.

Optionally, a request to record content items included list 45 (Figure 4) is transmitted from the mobile terminal 6 to the digital broadcast receiving terminal 4 (steps S51).

A request to transfer content items included in list 46 (Figure 4) is transmitted from the mobile terminal 6 to the digital broadcast receiving terminal 4 (step S52). Content data 9 relating to a content item is transmitted from the digital broadcast receiving terminal 4 to the mobile terminal 6 (step S53) and stored in memory 30 (step S54).

The process of receiving content data is repeated for each content item (step S55).

It will be appreciated that if there are plural files ready to be transferred, then whether or not an individual file is transferred (or transferred later), depends upon the size of the file.

### Transferring content

Other methods of transferring content may be employed.

For example, the digital broadcast receiving terminal 4 may attempt to transfer the content data 9 as soon as a recording has finished.

### Transcoding

In one embodiment of the present invention, content data 9 is transferred from the digital broadcast receiving terminal 4 to the mobile terminal 6 in MPEG-2 format. However, this format may not be a favoured format for consumption by the mobile terminal 6. For example, a favoured format for consumption by the mobile terminal 6 may be Real Networks, MPEG-4 or the like. In another embodiment of the present invention, content data 9 is transcoded before transfer.

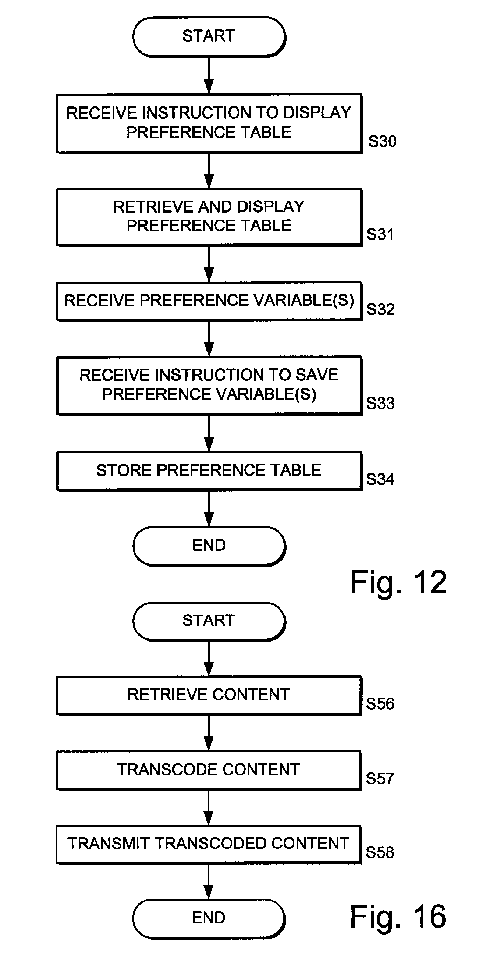

Referring to Figure 16, a flow diagram of a method of transcoding content data is shown.

When the digital broadcast receiving terminal 4 receives a request to transfer content data 9, it retrieves the content data 8 (step S56), transcodes the content data 9 (step S57) and transmits the transcoded content data 9 to the mobile terminal 9 (step S58).

Because trancoding takes time, the user may be given the option to select whether and which items are to be transcoded. Therefore, the digital broadcast receiving terminal 4 and/or mobile terminal 6 may present a user interface which allows the user to select, for example by ticking a box, which recorded content item are to be transcoded.

The digital broadcast terminal 6 may have a default setting to transcode all or some of the recorded content regardless of whether the content is to be transferred to the mobile terminal 6. A user profile may be provided at the digital broadcast receiving terminal 4 and/or mobile terminal 6 and which includes a transcoding setting (not shown).

Different mobile terminals can have different hardware and software capabilities. For example, some of the capabilities which can vary from one mobile terminal to another include screen resolution and size, CPU performance, amount of storage and codecs. Therefore, the digital broadcast receiving terminal 4 may request and the mobile terminal 6 may transmit (either in response to a request or unprompted), a description of one or more hardware and/or software capabilities.

This information can be used by the digital broadcast receiving terminal 4 to adapt content data 9, ESG 11 and/or the manner in which data is transmitted and received. For example, the quality of an encoded stream may be adapted according to the amount of memory and processing power available at the mobile terminal. If there is insufficient memory or CPU performance, then lower quality coding may be used. In another example, appropriate transcoding may be selected depending on the codec in the mobile terminal 6.

### Authentication

As explained earlier, one terminal 4, 6 may authenticate the other before transmitting a request to record or a request to download, or downloading content data. This can be used to ensure that only a valid mobile terminal 6 is allowed to use the digital broadcast receiving terminal 4, in other words that the terminals 4, 6 are paired.

### - Authentication using Bluetooth™-

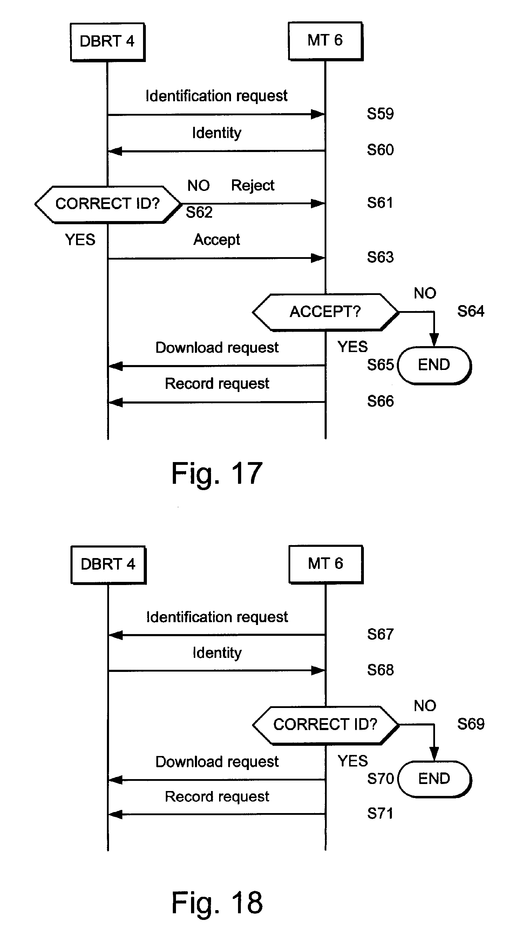

Referring to Figure 17, a flow diagram of a method of authenticating the mobile terminal 6 using Bluetooth™ is shown. This is referred to as "active" authentication.

The digital broadcast receiving terminal 4 transmits an identification request to the mobile terminal 6 when the personal area network connection 5 is established (step S59). The mobile terminal 6 responds by transmitting its identity (step S60).

If the exchange of identification request and identity is being performed for the first time or being performed during a set up operation, then the identity is stored by the digital broadcast receiving terminal 4 for future use.

The digital broadcast receiving terminal 4 determines whether the identity corresponds to a stored identity (step S61). If not, it transmits a REJECT message or simply does not respond (step S62). If so, it transmits an ACCEPT message (step S63). The mobile terminal 6 checks whether it has received an ACCEPT message (step S64) and, if so, proceeds with transmitting a record request and/or a download request (steps S65 & S66).

Referring to Figure 18, a flow diagram of a method of authenticating the digital broadcast receiving terminal 4 using Bluetooth™ is shown. This is referred to as "passive" authentication.

The mobile terminal 6 transmits an identification request to the digital broadcast receiving terminal 4 when the personal area network connection 5 is established (step S67). The digital broadcast receiving terminal 4 responds by transmitting its identity (step S68).

If the exchange of identification request and identity is being performed for the first time or being performed during a set up operation, then the identity is stored by the mobile terminal 6 for future use.

The mobile terminal 6 determines whether the identity corresponds to a stored identity (step S69). If so, it proceeds with transmitting a record request and/or a download request (steps S70 & S71).

A combination of active and passive authentication may be used.

### - Authentication using radio frequency identity tags-

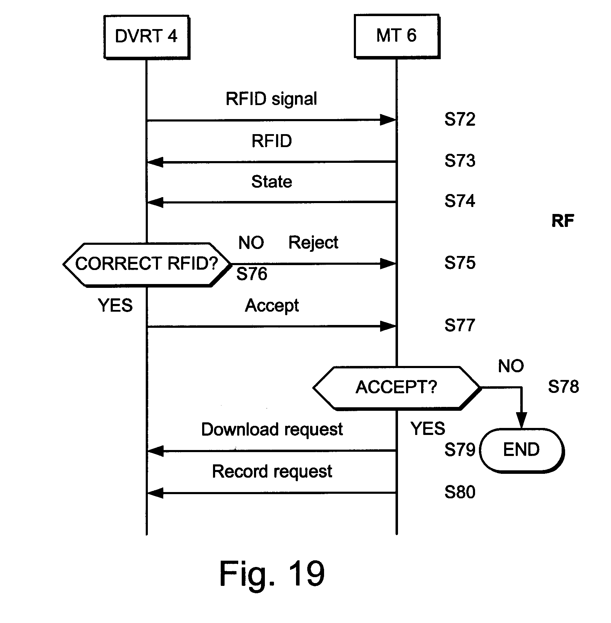

Referring to Figure 19, a flow diagram of a method of authenticating the mobile terminal 6 using radio frequency identity tags is shown. The radio frequency identity tag may be incorporated into the mobile terminal 6 or form part of the transceiver circuit 26 (Figure 4).

The digital broadcast receiving terminal 4 transmits an RFID signal to the mobile terminal 6 (step S72). The mobile terminal 6 modulates the RFID signal and returns it to the digital broadcast receiving terminal specifying its RFID (step S73). Optionally, the mobile terminal 6 can include other information including information regarding its state and condition, in other words its configuration (step S74).

If the exchange of identification request and identity is being performed for the first time or being performed during a set up operation, then the identity is stored by the digital broadcast receiving terminal 4 for future use in authentication.

The digital broadcast receiving terminal 4 determines whether the RFID corresponds to a stored RFID (step S75). If not, it transmits a REJECT message or simply does not respond (step S76). If so, it transmits an ACCEPT message (step S77).

The mobile terminal 6 checks whether it has received an ACCEPT message (step S78) and, if so, proceeds with establishing a personal area network connection 5 and transmitting a record request and/or a download request (steps S79 & S80).

The mobile terminal 6 may actively transmit a response back to the digital broadcast receiving terminal 4 using its own power so as to increase range. It will be appreciated that mobile terminal 6 can transmit the RFID request to the digital broadcast receiving terminal 4.

An overview of RFID may be found at www.rfid.org. The web-site includes a link to a white paper "RFID-A Basic Primer" V1.11 (1999) which may also be obtained from AIM, Inc., 634 Alpha Drive, Pittsburgh, PA 15238, USA.

Identification is desirable when several mobile terminals can access the digital broadcast terminal 4. This can happen in a household where two or more members of the household have a mobile terminal.

### Download recovery

Problems may be encountered while transferring content from the digital broadcast receiving terminal 4 to the mobile terminal 6. For example, the mobile terminal 6 user may intentionally pause downloading, the digital broadcast receiving terminal 4 and/or the mobile terminal 6 may suffer a power failure or the connection may be disrupted. The download may also run into software-related problems. For example, the content file may be corrupted or the downloading software may crash.

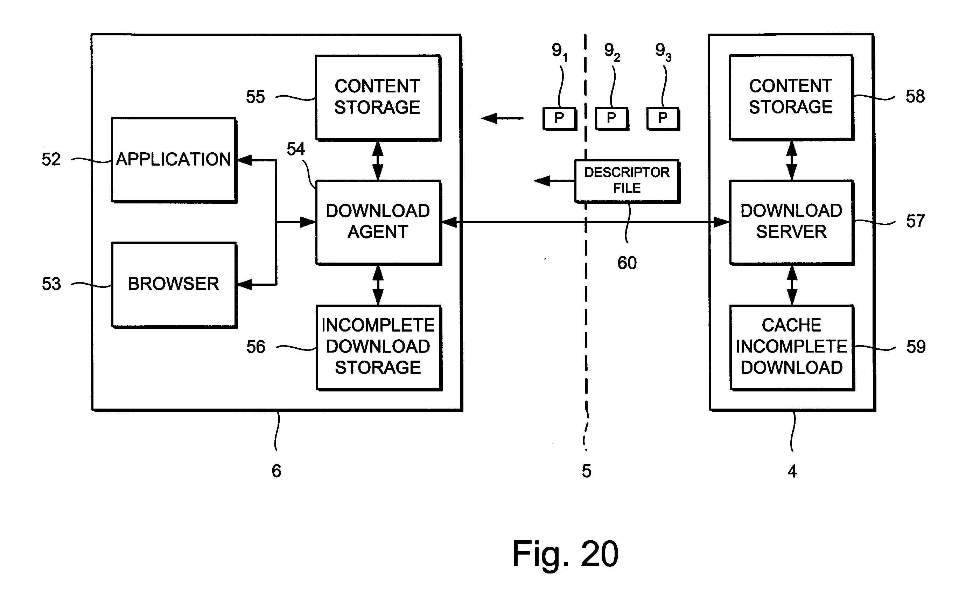

Referring to Figure 20, a functional representation of the digital broadcast receiving terminal 4 and the mobile terminal 6 according to the present invention is shown.

The mobile terminal 6 comprises an application 52 and/or a browser 53 which consumes content data 9. The content data 9 is delivered to the application 52 and/or a browser 53 using a download agent 54. The download agent 54 is provided with content storage 55 and an incomplete download content storage 56. Preferably, incomplete download content storage 56 comprises non-volatile area of storage 20 (Figure 4).

The digital broadcast receiving terminal 4 comprises a download server 57 for providing content to the download agent 54, content storage 58 and a cache 59 for downloadable content 59.

In an embodiment of the present invention, a modified Open Mobile Alliance (OMA) Download Over-The-Air (OTA) session is employed for download recovery, which will now be described in more detail:

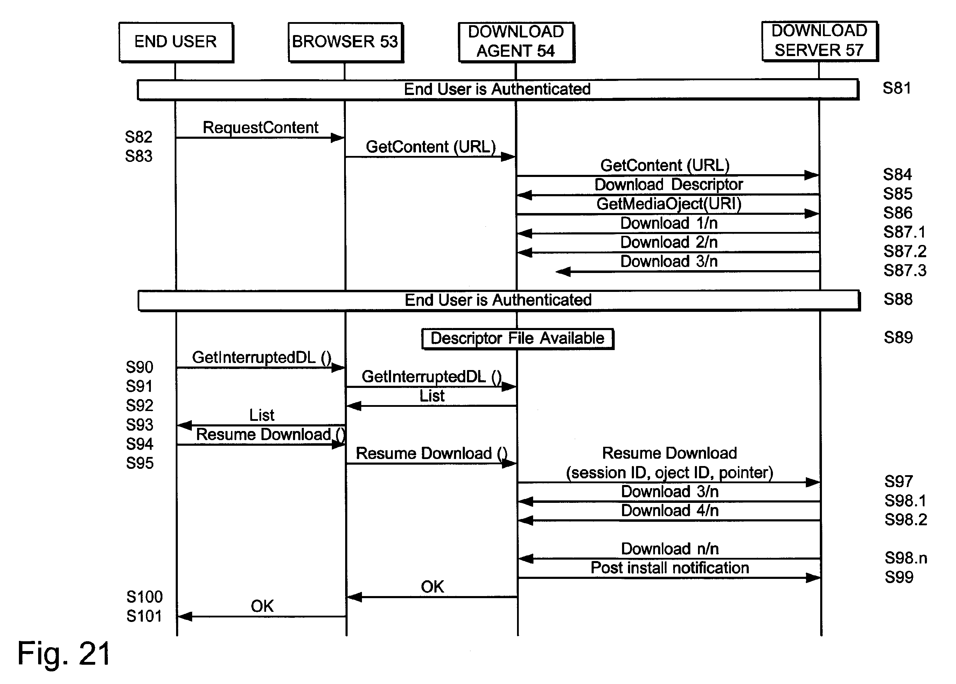

Referring to Figure 21, a flow diagram of a method of download recovery according to an embodiment of the present invention is shown.

A user of a mobile terminal 4 accesses the digital broadcast receiving terminal 4 and is authenticated (step S81). A mobile terminal user accesses content in the digital broadcast receiving terminal 4 using browser 51 or other application 52 to download content and identifies content to be downloaded.

The user instructs the browser to obtain specified content, in this cast content data 9 (step S82). The browser 51 sends a GetContent message to the download agent 54 (step S83) which in turn transmits the GetContent message to the download server 57 (step S84). The download server 57 transmits a Download Descriptor file 60 to the download agent 54 (step S85) which is stored in the incomplete download storage 56. The Download Descriptor file comprises attributes such as size of the content file and a universal resource identifier (URI) of a location from which to fetch the content file.

The download agent 54 transmits a GetMediaObject instruction to the URI specified in the Download Descriptor file 60 to get the content file (step S86). The file is transmitted from the download server 57 to the download agent 54 in a number of content data packets 9₁, 9₂, 9₃ which are stored in the incomplete download storage 56 as they arrive (step S87.1 & S87.2).

If an interruption occurs, for example during transmission of a third packet 9₃ (step S87.3), then the connection between the download agent 54 and download server 57 is re-established and the user is authenticated (step S88).

The download agent 54 retrieves the Download Descriptor file 60 from the incomplete download file 56. The user can determine how much of the download has been completed (steps S90 to S92) and instruct the download agent to recover the lost packet 9₃ and download remaining packets (not shown) (steps S94 & S95). The download agent 54 sends a Resume Download message to the download server 57, specifying a session ID, an object ID and a pointer to the missing packet (step S97).

The download server 57 transmits the remaining packets to the download agent 54 starting with the lost packet 9₃. As before, the packets are stored in the incomplete download storage 56 as they arrive (step S98.1, S98.2,..., S98.n).

When all the packets have been successfully received, the download agent 54 transmits a message to the download server 57 to indicate that the download has been successfully completed (step S99). The download server 57 may clear cache 59.

Content in the incomplete download server 56 is transferred to content storage 55 ready for consumption. The download agent 54 notifies the browser 53 that download has been completed (step S100) which in turn notifies the user (step S101).

The method can be employed when downloading over a personal area network 5 or Internet 7 and PLMN 8 (Figure 1).

A copy of the OMA Download OTA v1.0 specification can be found at www.openmobilealliance.org/documents.asp or obtained from Open Mobile Alliance Ltd., 2570 W. El Camino Real Suite 304, Mountain View, CA 94040-1313 USA.

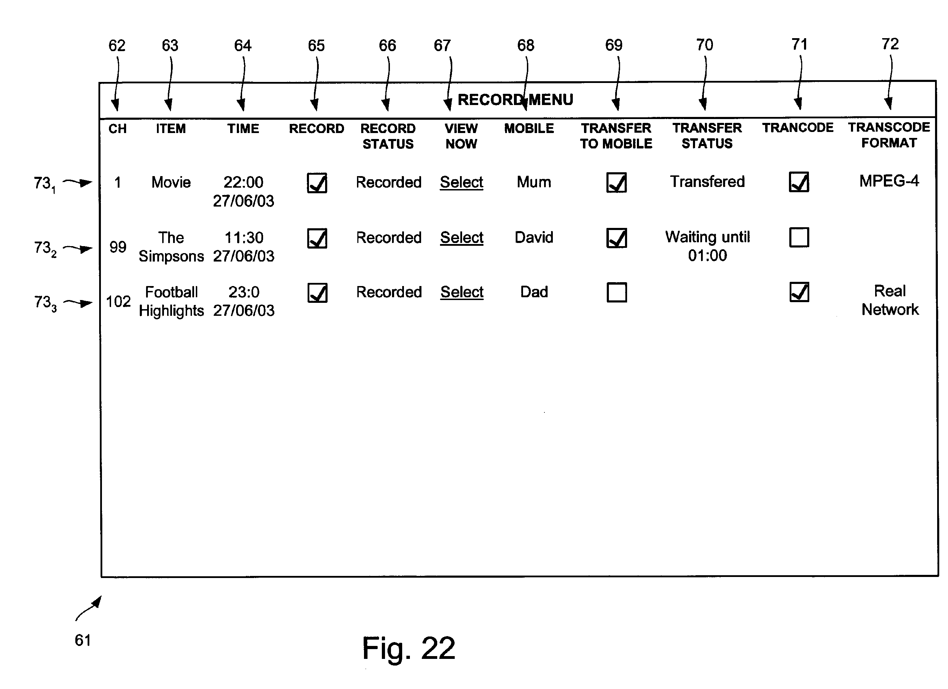

Referring to Figure 22, an on-screen display (OSD) 61 presented on television set 19 (Figure 4) is shown. The OSD 61 may be generated by the television set 19 or the digital broadcast receiving terminal.

The OSD 61 and a remote controller (not shown) provide a user interface. Using the OSD 61 and remote controller (not shown), a user may view recording and downloading options and enter instructions including channel selection 62, item selection 63, time selection 64, recording selection 65 for instructing the digital mobile terminal to record an item, recording status 66 for indicating whether an item has been recorded, viewing selection 67 for instructing the digital broadcast terminal 4 to play a recorded item, mobile terminal selection 68 for instructing the digital broadcast terminal 4 which mobile terminal to transfer content, transfer selection 69 for instructing the terminal 4 whether or not to transfer content, transfer status 70 for indicating whether a content item has been transferred and, if not, when it scheduled to occur, transcoding selection 71 for instructing the digital broadcast terminal 4 to transcode content and transcoding format 72 for instructing the digital broadcast terminal 4 what transcoding format to use. A number of entries 73₁, 73₂, 73₃ may be made.

It will be appreciated that many modifications may be made to the embodiments hereinbefore described. The mobile terminal may take the form of a personal digital assistant. Furthermore, the digital broadcast receiving terminal may be in the form of a device integrated into a television set or the digital broadcast receiving terminal 4 can be in form of a device integrated into portable handheld terminal. The digital broadcasting network may be a cable or satellite DVB network, terrestrial Integrated Services Data Broadcast (ISDB-T) network, Advanced Television Systems Committee (ATSC) network or a Digital Audio Broadcasting (DAB) network and the digital broadcast receiving terminal can be modified accordingly. In addition to digital broadcasting, the present invention can be used in analogue broadcasting, for example if appropriate encoding functionality is implemented in the broadcast receiving terminal. The broadcast terminal and mobile terminal may be the same device.

## Claims

1. A method of transferring content from a broadcast receiving terminal to a mobile terminal, the method comprising:
providing a request to the broadcast receiving terminal to record selected broadcast content; and
receiving the selected broadcast content from the broadcast receiving terminal.

2. A method according to claim 1, wherein providing the request to record selected broadcast to the broadcast receiving terminal comprises:
transmitting the request to record selected broadcast to the broadcast receiving terminal from the mobile terminal.

3. A method according to claim 2, wherein transmitting the request to record selected broadcast to the broadcast receiving terminal comprises:
transmitting the request to record selected broadcast over a personal area network connection.

4. A method according to claim 2, wherein transmitting the request to record selected broadcast to the broadcast receiving device comprises:
transmitting the request to record selected broadcast via a public land mobile network (PLMN).

5. A method according to any one of claims 2 to 4 comprising:
determining whether a network connection can be established; and
if a network connection can be established, establishing said network connection.

6. A method according to claim 5, further comprising:
transmitting said request to record selected broadcast in dependence upon establishing said network connection.

7. A method according to claim 1, wherein providing the request to record selected broadcast to the broadcast receiving terminal comprises:
transmitting the request to record selected broadcast from a user interface coupled to the broadcast receiving terminal.

8. A method according to any preceding claim, further comprising:
receiving instructions from a user via a television set and
preparing said request in dependence upon said instructions.

9. A method according to any preceding claim, comprising:
providing a request to the broadcast receiving terminal to transfer recorded selected broadcast content.

10. A method according to any preceding claim, comprising:
receiving a request for identification from said broadcast receiving terminal.

11. A method according to any preceding claim, comprising:
providing identification to said broadcast receiving terminal.

12. A method according to any preceding claim, comprising:
receiving the selected broadcast content from the broadcast receiving terminal via a public land mobile network.

13. A method according to any preceding claim, comprising:
receiving the selected broadcast content from the broadcast receiving terminal via a personal area network connection.

14. A method according to any preceding claim, comprising:
receiving a broadcast schedule from the broadcast receiving terminal.

15. A method according to claim 14, wherein receiving the broadcast schedule from the broadcast receiving terminal comprises:
receiving the broadcast schedule from the broadcast receiving terminal via a public land mobile network.

16. A method according to claim 14, wherein receiving the broadcast schedule from the broadcast receiving terminal comprises:
receiving the broadcast schedule from the broadcast receiving terminal via a personal area network connection.

17. A method according to any one of claims 14 to 16, comprising:
presenting said broadcast schedule to said user.

18. A method according to any one of claims 14 to 17, further comprising:
receiving a selection of broadcast content from said broadcast schedule, said selection being made by a user.

19. A method according to any preceding claim, comprising:
determining an amount of the selected broadcast content and
determining connectivity for receiving said selected broadcast content.

20. A method according to any preceding claim, comprising:
selecting a time for receiving said selected broadcast content in dependence upon said amount and said connectivity.

21. A method according to claim 20, comprising:
providing a preference table for selecting the time.

22. A method according to any preceding claim, comprising:
receiving notification from the broadcast receiving terminal that said selected content has been recorded.

23. A method according to any preceding comprising:
receiving from said broadcast receiving terminal a download descriptor.

24. A method according to claim 23, further comprising:
storing said download descriptor.

25. A method according to claim 24, further comprising:
receiving data packets comprising at part of said selected content.

26. A method according to claim 25, further comprising:
determining whether content transfer has been interrupted.

27. A method according to claim 26, further comprising:
determining at least part of said selected content still to be transferred.

28. A method according to claim 27, further comprising:
transmitting a request to continue downloading, said request including identity of said at least part of said selected content still to be transferred.

29. A method according to any preceding claim, further comprising:
determining whether said selected broadcast content has been successfully transferred and
if said selected broadcast content has been successfully transferred, transmitting a notification to said broadcast receiving terminal that the selected broadcast content has been successfully transferred.

30. A method of transferring content from a broadcast receiving terminal to a mobile terminal, the method comprising:
receiving a request to record selected broadcast content; and
transmitting the selected broadcast content to a mobile terminal.

31. A system for transferring content from a broadcast receiving terminal to a mobile terminal, the method comprising:
providing a request to the broadcast receiving terminal to record selected broadcast content; and
receiving the selected broadcast content from the broadcast receiving terminal.

32. A system for transferring content from a broadcast receiving terminal to a mobile terminal, the method comprising:
receiving a request to record selected broadcast content; and
transmitting the selected broadcast content to a mobile terminal.

33. Apparatus comprising a digital broadcast receiving terminal and a mobile terminal, each terminal including a respective personal area network interfacing means, the mobile terminal being configured to transmit a request to the digital broadcast receiving device to record data relating to selected broadcast content, the digital broadcast receiving terminal being configured to extract said selected broadcast content data from a digital broadcast, to store the selected broadcast content data in memory and to transmit the selected broadcast content data to the mobile terminal triggered by establishment of a personal area network connection between the terminals.

34. A digital broadcast receiving terminal including a personal area network interfacing means and configured to receive a request from a mobile terminal to record selected broadcast content, to extract data relating to the selected broadcast content from a digital broadcast, to store the selected broadcast content data in memory and to transmit the selected broadcast content data to the mobile terminal triggered by establishment of a personal area network connection between the terminals.

35. Apparatus according to claim 33 or a digital broadcast receiving terminal according to claim 34, wherein the digital broadcast receiving terminal is configured to extract data relating to a broadcast schedule from the digital broadcast.

36. Apparatus or terminal according to claim 35, wherein the digital broadcast receiving terminal is configured to transmit at least part of the broadcast schedule data to the mobile terminal.

37. Apparatus or terminal according to claim 35 or 36, wherein the digital broadcast receiving terminal is configured to select at least part of the broadcast schedule data and to transmit said at least part of the broadcast schedule data to the mobile terminal.

38. Apparatus or terminal according to claim 37, wherein the digital broadcast receiving terminal is configured to filter the broadcast schedule data using a user profile and to transmit said filtered broadcast schedule data to the mobile terminal.

39. Apparatus or terminal according to any one of claims 35 to 38, wherein digital broadcast receiving terminal is configured to transmit at least part of the broadcast schedule data or filtered broadcast schedule data to the mobile terminal in response to establishment of a personal area network between the terminals.

40. Apparatus or terminal according to any one of claims 35 to 38, wherein digital broadcast receiving terminal is configured to transmit at least part of the broadcast schedule data or filtered broadcast schedule data to the mobile terminal via another network.

41. Apparatus or terminal according to any one of claims 33 to 40, wherein the digital broadcast receiving terminal is configured to transmit an identification request to the mobile terminal via the personal area network.

42. Apparatus or terminal according to any one of claims 33 to 41, wherein the digital broadcast receiving terminal is configured to receive identification from the mobile terminal via the personal area network and to authenticate the mobile terminal using said identification.

43. Apparatus or terminal according to any one of claims 33 to 42, wherein the digital broadcast receiving terminal is configured to receive a request to download the selected broadcast content data.

44. Apparatus or terminal according to claim 43, wherein the digital broadcast receiving terminal is configured to transmit the selected broadcast content data to the mobile terminal in response to receiving said request to download the selected broadcast content.

45. A mobile terminal having a personal area network interfacing means and configured to transmit a request to a digital broadcast receiving terminal to record selected broadcast content and to receive data relating to the selected broadcast content from the digital broadcast receiving terminal triggered by establishment of a personal area network between the terminals.

46. Apparatus according to claim 33 or a terminal according to claim 45, wherein the mobile terminal is configured to receive data relating to a broadcast schedule from the digital broadcast receiving terminal.

47. Apparatus or a terminal according to claim 46, wherein the mobile terminal is configured to allow a user to select the broadcast content for recording using the broadcast schedule.

48. Apparatus according to claim 33, 46 or 47 or a terminal according to claim 45, 46 or 47, wherein the mobile terminal is configured to transmit the request to the digital broadcast receiving terminal to record selected broadcast content in response to establishment of a personal area network between the terminals.

49. Apparatus according to any one of claims 33, 46, 47 or 48 or a terminal according to any one of claims 45 to 48, wherein the mobile terminal is configured to transmit an identification request to the digital broadcast receiving terminal via the personal area network.

50. Apparatus according to any one of claims 33 or 46 to 49 or a terminal according to any one of claims 45 to 49, wherein the mobile terminal is configured to receive identification from the digital broadcast receiving terminal via the personal area network.

51. Apparatus comprising a digital broadcast receiving terminal and a mobile terminal, the terminals including respective personal area network interfacing means, the mobile terminal being configured to transmit a request to the digital broadcast receiving device to record selected broadcast content, the digital broadcast receiving terminal being configured to extract data relating to the selected broadcast content from a digital broadcast, to store the selected broadcast content data in memory and to transmit the selected broadcast content data to the mobile terminal at a predetermined time.
